# DEMANDE DE BREVET EUROPEEN

(11) **EP 1 523 162 A1**
(43) Date de publication de la demande: **13.04.2005**
(21) Numéro de dépôt: 04292205.4
(22) Date de dépôt: 14.09.2004
(51) Int. Cl.: H04M 1/725, H04Q 7/22, H04Q 7/32, G06F 9/445

(54) **Dispositif et procédé de traitement de messages pour terminal de télécommunication et terminal de télécommunication pourvu d'un tel dispositif**

(30) Priorité: 10.10.2003 FR 0311905
(71) Demandeur: FRANCE TELECOM, 75015 Paris (FR)
(72) Inventeur: Prouvost, Denis, 75015 Paris (FR); Brun, Arnaud, 92100 Boulogne (FR)
(74) Mandataire: Casalonga, Axel

(57) **Abrégé**

Ce dispositif de traitement de messages (M) pour terminal de télécommunication est destiné à l'analyse de messages reçus lors de la mise en oeuvre d'un service de messagerie électronique.

Il comprend un analyseur de messages (12) apte à détecter un type de message parmi un ensemble de types de messages prédéterminés susceptibles de véhiculer des données destinées à des applications logicielles embarquées à bord du terminal et des moyens (14) d'extraction de données adaptés pour extraire, de chaque message reçu qui appartient à l'un desdits types de messages, les données destinées auxdites applications.

## Description

La présente invention concerne un dispositif et un procédé de traitement de messages pour terminal de télécommunication et se rapporte en particulier au traitement de messages reçus par un terminal de télécommunication lors de la mise en oeuvre d'un service de messagerie électronique. L'invention concerne également un terminal de télécommunication équipé d'un tel dispositif de traitement.

Les services de messagerie électronique permettent, à ce jour, de transmettre vers un terminal distant des messages qui se présentent sous la forme d'un texte associé, le cas échéant, à du son, à des images fixes, à des images animées, voire à de la vidéo.

Ainsi, par exemple, le service de messages courts ou SMS ("Short Message Service") permet d'adresser à un terminal d'un utilisateur distant un texte codé par exemple sur sept bits, qui correspond à 160 caractères. Ce service permet d'adresser plusieurs classes de messages SMS qui correspondent à divers modes de traitement des messages par le terminal.

La classe zéro permet d'envoyer un message qui, lorsqu'il est reçu, est directement affiché à l'écran du terminal distant sans être stocké dans sa mémoire.

La classe 1 correspond à un mode d'utilisation selon lequel le message, lorsqu'il est reçu, est stocké dans la mémoire du terminal ou dans le module d'identification carte SIM de l'abonné. La réception d'un tel message est généralement notifiée à l'utilisateur par affichage d'une icône sur l'écran du terminal. Après consultation, le message peut être soit effacé, soit conservé en mémoire pour une consultation ultérieure.

Enfin, la classe 2 permet d'envoyer au terminal un message de service qui est destiné à la carte SIM de l'abonné et est utilisée, par exemple, pour la mise à jour de fichiers de la carte SIM, le déclenchement de logiciels particuliers de la carte SIM, etc...

Selon ce dernier mode de fonctionnement, le terminal est pourvu d'un algorithme de détection du type de message reçu de manière à identifier les messages appartenant à la classe 2 afin de les adresser directement à la carte SIM.

Le service de messagerie EMS (« Enhanced Messaging Service ») correspond à une évolution du service de messagerie SMS évoqué ci-dessus et permet d'expédier au destinataire final du texte formaté, du son, des images fixes, ou des images animées. Au niveau du terminal distant, les messages EMS sont détectés comme tels et traités en conséquence. Le terminal de l'utilisateur assure donc une détection des messages EMS afin d'assurer un traitement particulier de ces messages.

Le service de messagerie MMS (« Multimedia Messaging Service ») correspond à un service qui permet aux utilisateurs distants d'envoyer ou de recevoir des messages multimédia de grande taille, c'est-à-dire des messages dont le contenu peut être du texte, des images, du son et de la vidéo. Ce service nécessite l'utilisation d'un serveur MMS dans lequel les messages sont stockés puis récupérés automatiquement ou à la demande par l'utilisateur.

Enfin, le service de courrier électronique est un service de messagerie relativement puissant, qui permet d'envoyer ou de recevoir un message multimédia de grande taille, qui peut contenir du texte, des images, du son, des données vidéo, ...

Ces différents services de messagerie électronique permettent de transmettre de manière relativement efficace des données de différentes natures à des abonnés distants. Ils présentent cependant un inconvénient majeur dans la mesure où selon ces services de messagerie, il n'est pas possible de gérer de manière générique la réception de données destinées à des applications logicielles embarquées à bord du terminal.

Ces services nécessitent en outre d'utiliser un terminal spécifique compatible avec ces services.

Le but de l'invention est donc de palier cet inconvénient.

Elle a donc pour objet un dispositif de traitement de messages pour terminal de télécommunication selon lequel les messages sont reçus par le terminal lors de la mise en oeuvre d'un service de messagerie électronique. Ce dispositif comprend un analyseur de messages apte à détecter un type de message parmi un ensemble de types de messages prédéterminés susceptibles de véhiculer des données destinées à des applications logicielles embarquées à bord du terminal et des moyens d'extraction de données adaptés pour extraire, de chaque message reçu qui appartient à l'un desdits types de messages, les données destinées auxdites applications.

Ainsi, après extraction, les données peuvent être présentées en entrée de programmes internes au terminal.

Selon une autre caractéristique du dispositif selon l'invention, celui-ci comporte en outre des moyens de stockage des données extraites des messages par les moyens d'extraction.

Dans un mode de réalisation, l'analyseur de messages comporte des moyens de mémorisation dans lesquels sont stockés, pour chaque type de message dudit ensemble de types de messages, un ensemble d'au moins un critère de sélection destiné à être appliqué à chaque message reçu par le terminal pour la détection du type de message.

En variante, les messages reçus étant écrits en langage de balisage extensible XML (« extensible Markup Language »), l'analyseur de messages comprend un analyseur syntaxique XML.

Selon une autre caractéristique de l'invention, les moyens d'extraction de données comprennent des moyens de mémorisation dans lesquels est stocké, pour chaque type de message, un ensemble d'au moins un identifiant de données destiné à reconnaître le type de données véhiculées par le message, à chaque identifiant de données étant affectée une méthode d'extraction de données correspondante.

Selon une autre caractéristique de l'invention, les moyens de stockage de données comportent, pour chaque donnée extraite identifiée par un type de données, des informations de type de données et de valeurs de données.

Selon l'invention, il est également proposé un terminal de téléphonie, caractérisé en ce qu'il est équipé d'un dispositif de traitement de messages tel que défini ci-dessus.

Enfin, l'invention a pour objet un procédé de traitement de messages pour terminal de télécommunication, lesdits messages étant reçus par le terminal lors de la mise en oeuvre d'un service de messagerie électronique, caractérisé en ce qu'il comprend les étapes consistant à analyser les messages pour détecter le type de message auquel appartient chaque message reçu parmi un ensemble de types de messages prédéterminés susceptibles de véhiculer des données destinées à des applications logicielles embarquées à bord du terminal et extraire, de chaque message reçu (M) qui appartient à l'un desdits types de messages, les données destinées auxdites applications.

D'autre buts, caractéristiques et avantages de l'invention apparaîtront à la lecture de la description suivante, donnée uniquement à titre d'exemple non limitatif, et faite en référence aux dessins annexés sur lesquels :
- la figure 1 est un schéma synoptique illustrant l'architecture d'un dispositif de traitement de messages pour terminal de téléphonie conforme à l'invention ;
- la figure 2 est un tableau illustrant l'agencement des moyens de mémorisation de l'analyseur de messages ;
- la figure 3 est un tableau illustrant l'agencement des moyens de mémorisation des moyens d'extraction de données ;
- la figure 4 est un schéma illustrant l'architecture des moyens de stockage de données dans lesquels sont chargées les données extraites des messages ;
- la figure 5 est un organigramme illustrant le fonctionnement d'un dispositif de traitement de messages conforme à l'invention ; et
- la figure 6 est une vue d'un écran de veille d'un terminal de télécommunication illustrant un exemple d'application d'un dispositif de traitement de messages conforme à l'invention .

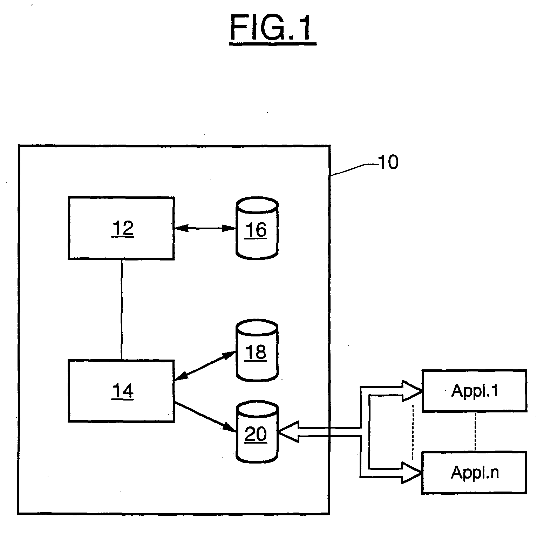

Sur la figure 1, on a représenté la structure générale d'un dispositif de traitement de messages conforme à l'invention, désigné par la référence numérique générale 10. Ce dispositif 10 est destiné à être intégré à un terminal de télécommunication, tel qu'un poste téléphonique mobile, pour assurer le traitement de messages reçus lors de la mise en oeuvre de services de messagerie électronique, tels que des services de messageries de types SMS, EMS, MMS, ou encore de services de courriers électroniques pour extraire de messages reçus des données destinées à être utilisées par des applications logicielles Appl.1, ..., Appl.n embarquées à bord du terminal.

Comme on le voit sur cette figure 1, le dispositif de traitement 10 comporte essentiellement un analyseur de messages 12 destiné à recevoir les message reçus par le dispositif 10 et à détecter le type de messages auquel le message appartient et des moyens 14 d'extraction des données destinés à extraire les données destinées aux applications logicielles Appl.1, ..., Appl.n.

Bien que sur cette figure 1 les modules 12 et 14 soient représentés sous la forme de briques logicielles distinctes, on conçoit néanmoins que ces modules peuvent être intégrés à une unique brique logicielle intégrée au terminal de télécommunication auquel le dispositif 10 appartient.

Le module 12 d'analyse est associé à des moyens de mémorisation 16 dans lesquels sont stockés, pour chaque type de messages susceptibles d'être reçus, un ensemble de critères de sélection servant à identifier le message reçu.

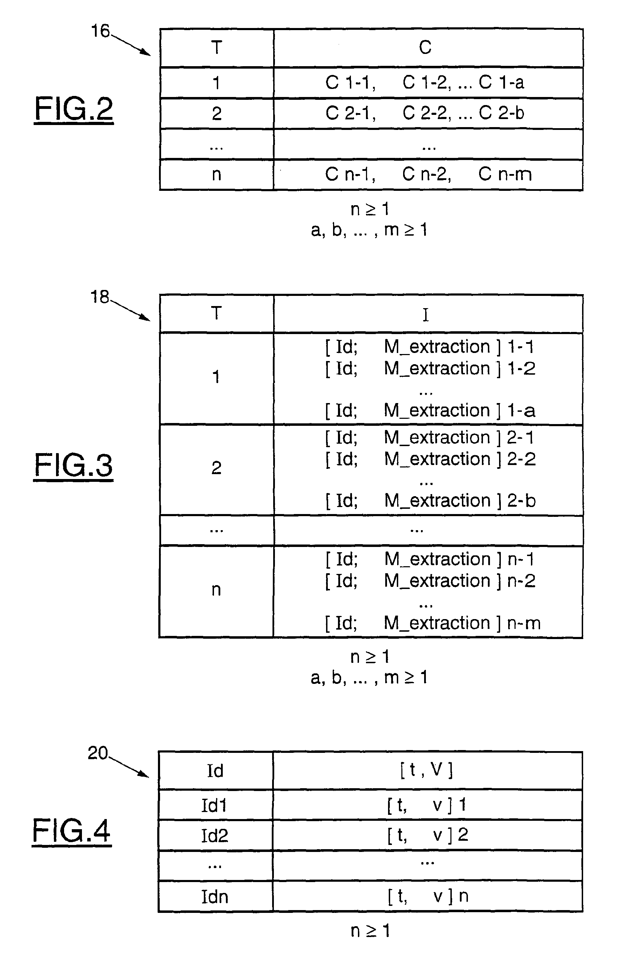

Comme on le voit sur la figure 2, qui illustre l'architecture de ces moyens de mémorisation 16, ces informations sont stockées sous la forme d'un tableau regroupant, pour chaque type T de messages 1, 2, ..., n, un ensemble de critères C1-1, ..., C1-a ; C2-1, ..., C2-b, ..., Cn-1, ...Cn-m, avec n supérieur ou égal à 1 et a, b, ...m, supérieurs ou égaux à 1.

Comme cela sera décrit en détail par la suite, ces critères de sélection C sont destinés à être appliqués au message reçu pour reconnaître si le message appartient ou non à un type de messages connu et à reconnaître le type de message auquel il appartient, parmi l'ensemble des types de messages 1,2, ..., n, qui sont susceptibles de véhiculer des données destinées aux applications Appl.1,..., Appl.n.

En ce qui concerne le module 14 d'extraction de données, on voit sur la figure 1 que celui-ci est associé à des premiers moyens de mémorisation 18 dans lesquels sont chargés, pour chaque type de message, un ensemble d'au moins un identifiant de données servant à reconnaître le type de données véhiculées par le message et, pour chaque type de données identifiées, à affecter une méthode d'extraction correspondante.

Comme on le voit sur la figure 3, ces premiers moyens de mémorisation 18 sont agencés sous la forme d'une table comprenant, pour chaque type T de messages 1, 2, ..., n, des informations I permettant l'extraction des données. Plus particulièrement, dans les premiers moyens de mémorisation 18, à chaque type T de messages 1, 2, ...,n, correspond un ou plusieurs identifiants de données Id ainsi que des informations *M_extraction* indiquant des méthodes d'extraction respectives à appliquer aux messages.

Le module 14 d'extraction de données est également associé à des deuxièmes moyens de mémorisation 20 servant au stockage des données extraites. En se référant à la figure 4, ces données extraites sont mémorisées sous la forme d'une table regroupant, pour chaque identifiant de données Id1, ...Idn, un type *t* et une valeur *ν* de données correspondants, ces informations étant dès lors directement accessibles par les applications Appl.1, ..., Appl.n.

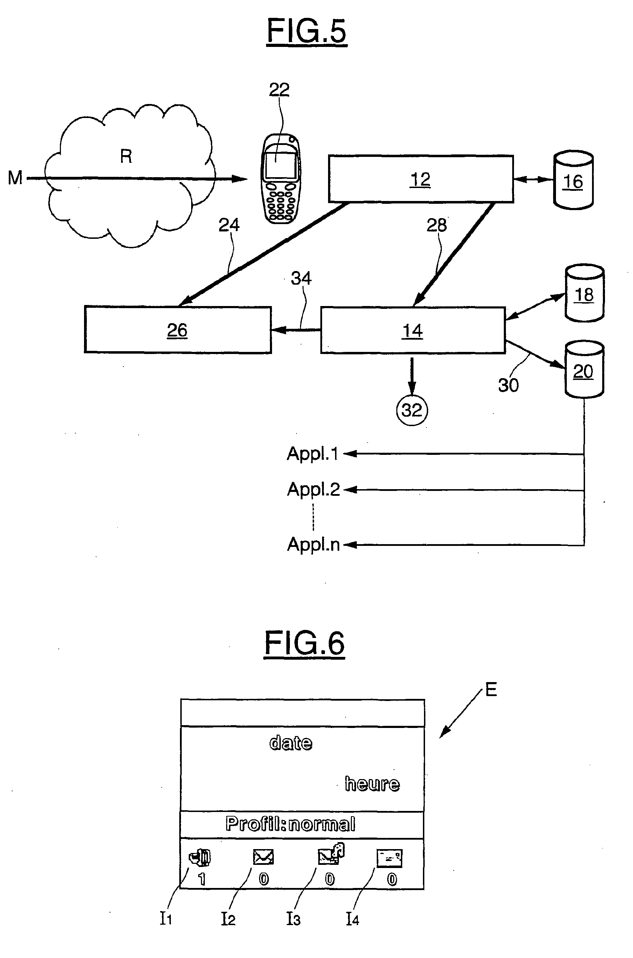

On va maintenant décrire en référence à la figure 5 le principe de fonctionnement du dispositif de traitement de messages qui vient d'être décrit. Sur cette figure, les principaux éléments constitutifs du dispositif 10 ont été repris, les flèches correspondant à des étapes de fonctionnement de ce dispositif.

En fonctionnement, lorsque le terminal reçoit un message M à partir du réseau R de télécommunication auquel le terminal 22 appartient, l'utilisateur n'est tout d'abord pas informé de la réception d'un tel message. Ce message est en effet intercepté par le dispositif de traitement qui est installé dans le terminal 22 et qui effectue une analyse de ce message de manière à détecter la présence éventuelle de données destinées aux applications Appl.1, ...Appl.n. Pour procéder à une telle analyse, le module d'analyse de messages 12 applique les critères de sélection C stockés dans les moyens de mémorisation 16 afin de déterminer si le message M reçu appartient ou non à un type de messages connu comme véhiculant de telles données et donc, de déterminer si le message doit être retenu.

Dans le cas où le message n'est pas reconnu, c'est-à-dire dans le cas où le message ne contient pas de données destinées aux applications logicielles embarquées à bord du terminal 22, le message est traité de manière traditionnelle (étape 24) de sorte qu'une notification graphique et/ou sonore est générée au moyen d'une interface 26 de manière à informer l'utilisateur de la réception d'un nouveau message.

Au contraire, dans le cas où le message est reconnu comme contenant des données pertinentes (étape 28), les données qu'il contient sont extraites par le module d'extraction de données 14.

Pour procéder à l'analyse d'un nouveau message M, le module d'analyse 12 applique de manière séquentielle chacun des critères C pour vérifier si le nouveau message correspond à l'un des n types de messages prédéterminés dont il a la description. Dès que le module d'analyse 12 détecte que le nouveau message répond à l'ensemble des critères de l'un des types T de message, le message ainsi que le type de message sont fournis au module d'extraction de données 14.

Comme indiqué précédemment, pour procéder à l'extraction des données, ce module d'extraction de données 14 utilise des identifiants de données *Id* afin de déterminer le type de données véhiculées par le message puis affecte en conséquence une méthode d'extraction permettant d'extraire les données véhiculées. Ainsi, à ce stade, le module d'extraction détecte, par exemple, si les données sont de type texte, image, son, vidéo, de type multimédia, ...et procède alors à une extraction de ces données en fonction du type de données détectées. Après extraction, les données sont mémorisées dans les deuxièmes moyens de mémorisation 20 sous la forme d'informations de type *t* et de valeur *ν* de données associées à un identifiant *Id* de données (étape 30).

Une fois les données extraites, le message peut être soit supprimé (étape 32) soit conservé (étape 34) pour être traité de manière traditionnelle, c'est-à-dire pour être affiché sur l'interface 26 du terminal 22.

A titre d'exemple illustratif, non limitatif, on va maintenant décrire un exemple particulier de mise en oeuvre du procédé de traitement de message selon l'invention, dans le cas où le terminal 22 reçoit un message SMS de notification d'un nouveau message vocal dans sa boîte vocale.

Lorsqu'un correspondant laisse un message vocal sur la messagerie vocale du terminal 22, un message SMS de classe 0 et contenant un message textuel du type "1 nouveau message sur votre messagerie" est envoyé au terminal 22. Ce message appartient à un type de messages connu du dispositif de traitement du terminal 22, à savoir le type "SMS de notification d'au moins un message vocal", portant par exemple le numéro "1" en référence aux figures 2 et 3. Les critères de sélection de ce type de message sont stockés dans les moyens de mémorisation 16 et un ensemble d'au moins un identifiant de données à extraire ainsi qu'une une méthode d'extraction de ces données sont mémorisées dans les moyens de mémorisation 18. Dans l'art antérieur, ce message SMS était affiché, tel que reçu, sur l'écran du terminal 22. Selon l'invention, le procédé de traitement suivant lui est appliqué:

L'analyseur 12 du dispositif de traitement installé dans le terminal 22 intercepte le message SMS de notification d'un message vocal et l'analyse de manière à déterminer si le message appartient à un type connu de messages. L'analyse consiste à détecter si le message respecte un des ensembles de critères de sélection C, associé à l'un des types connus de messages stockés dans les moyens de mémorisation 16. En l'espèce, l'analyseur détecte que:
- l'adresse de l'émetteur du message est l'adresse de la messagerie vocale (critère C1-1)
- la classe du message est la classe 0 (critère C1-2)
- le texte du message est de la forme "x nouveau(x) message(s) sur votre messagerie" (critère C1-3)

Les trois critères du type "1" de messages étant vérifiés, l'analyseur 12 détecte qu'il s'agit d'un message de type "1", autrement dit un message SMS de notification d'au moins un message vocal.

Les moyens de mémorisation 18 mémorisent que le type "1" de messages:
- contient le nombre de message(s) en attente dans la messagerie vocale, et
- une méthode d'extraction consistant ici à extraire soit le premier caractère du message si le nombre de messages est inférieur ou égal à 9, soit les deux premiers caractères du messages si le nombre de messages supérieur ou égal à 10.

A l'aide de ces informations, le module d'extraction 14 extrait du message SMS reçu le nombre de message(s) en attente dans la messagerie vocale, ici un, et mémorise ce nombre dans les moyens de mémorisation 20.

Le dispositif de traitement met ensuite à jour l'écran de veille du terminal 22 afin d'y faire apparaître, de manière graphique, une indication selon laquelle un nouveau message vocal est en attente dans la boîte vocale de l'utilisateur, ici à l'aide d'un icône I1 (figure 6). Le SMS de notification de message vocal reçu est ici supprimé avant d'être affiché à l'écran du terminal 22, de sorte que l'utilisateur du terminal 22 ne le voit pas.

On notera que l'invention n'est pas limitée au mode de réalisation décrit. En effet, dans l'exemple de réalisation décrit précédemment, le module 12 d'analyse des messages utilise essentiellement des mécanismes propriétaires, c'est-à-dire un ensemble de critères de sélection servant à identifier le type de message auquel appartient un message reçu, par application de ces critères. En variante, selon un mode de mise en oeuvre du service de messagerie selon lequel les messages sont émis selon un langage de balisage extensible XML (extensible Mark up Language), le module d'analyse 12 peut être constitué par un analyseur syntaxique XML capable de détecter et identifier les balises contenues dans le message XML afin de détecter le type de message.

De même, le terminal de télécommunication auquel est intégré le dispositif de traitement conforme à l'invention peut être constitué par tout type de terminal de télécommunication approprié pour l'utilisation envisagée, telle qu'un terminal de téléphonie de type fixe ou mobile.

On notera également qu'une application particulièrement intéressante d'un tel dispositif concerne la création et la mise à jour d'un écran de veille capable de représenter en temps réel des informations utiles à l'utilisateur, telles que le nombre d'appels reçus, d'appels émis, d'appels perdus, de messages SMS reçus, de messages MMS téléchargés, le nombre de messages MMS en attente de téléchargement, le nombre de courriers électronique reçus, le nombre de messages vocaux en attente d'écoute, ...

Pour la réalisation et la mise à jour d'un tel affichage, le dispositif d'analyse 10 intercepte, en permanence, les messages reçus afin d'extraire les messages de notification de messagerie vocale. De tels messages sont identifiés à l'aide des critères de sélection C chargés dans les moyens de mémorisation 16. Par exemple, ces critères sont choisis de manière à vérifier l'adresse de l'émetteur du message, l'adresse devant correspondre à celle de la messagerie vocale, à vérifier la classe du message, la classe du message devant correspondre à la classe zéro, et à vérifier le texte du message, le texte devant être par exemple de la forme « X nouveaux messages sur votre messagerie ».

Une méthode d'extraction des informations pertinentes est alors extraite de la base de données 18. Dans le cas où l'on souhaite extraire le nombre de messages et le mettre à disposition d'une application embarquée dans le terminal, cette méthode d'extraction consiste en l'espèce à extraire le premier caractère du message reçu, qui correspond au nombre de messages en attente.

Si les trois critères ci-dessus sont vérifiés, il est alors procédé à une extraction du nombre de messages en attente dans la messagerie à l'aide de la méthode d'extraction récupérée. Cette information est stockée dans les deuxièmes moyens de mémorisation 20 pour être ensuite fournie à une application Appl.1,...Appl.n pour la mise à jour de l'afficheur.

Comme on le voit sur la figure 6, il est alors possible de créer un écran de veille E sur l'écran du terminal 22 sur lequel figurent, en association à des informations de date « *date »* et d'heures « *heure* » courantes, des icônes I1,' I2, I3 et I4 de notification de messages, pour chaque type de message. Il est également possible, à l'aide d'un tel dispositif, d'extraire d'autres informations, telles que des informations portant sur les messages vocaux reçus, par exemple le numéro du correspondant, la date et l'heure du dépôt du message, la longueur du message, etc., ainsi que des informations portant sur l'état de la boîte vocale de l'utilisateur, par exemple le nombre de nouveaux messages, le nombre de messages sauvegardés, la place disponible dans la boîte vocale, etc ...

## Revendications

1. Dispositif de traitement de messages pour terminal de télécommunication (22), lesdits messages étant reçus par le terminal lors de la mise en oeuvre d'un service de messagerie électronique, **caractérisé en ce qu'**il comprend un analyseur de messages (12) apte à détecter un type de message parmi un ensemble de types de messages prédéterminés susceptibles de véhiculer des données destinées à des applications logicielles embarquées à bord du terminal et des moyens (14) d'extraction de données adaptés pour extraire, de chaque message reçu (M) qui appartient à l'un desdits types de messages, les données destinées auxdites applications.

2. Dispositif selon la revendication 1, **caractérisé en ce qu'**il comprend en outre des moyens (20) de stockage des données extraites des messages par les moyens d'extraction.

3. Dispositif selon l'une des revendications 1 et 2, **caractérisé en ce que** l'analyseur de messages (12) comporte des moyens de mémorisation (16) dans lesquels sont stockés, pour chaque type de message dudit ensemble de types de messages, un ensemble d'au moins un critère de sélection (C) destiné à être appliqué à chaque message reçu par le terminal pour la détection du type de message.

4. Dispositif selon l'une des revendications 1 et 2, **caractérisé en ce que** les messages reçus étant écrits en langage de balisage extensible XML, l'analyseur de message (12) comprend un analyseur syntaxique XML.

5. Dispositif selon l'une quelconque des revendications 1 à 4, **caractérisé en ce que** les moyens (14) d'extraction de données comprennent des moyens de mémorisation (18) dans lesquels est stocké, pour chaque type de message, un ensemble d'au moins un identifiant de données (Id) destiné à reconnaître le type de donnée véhiculée par le message, à chaque identifiant de données étant affectée une méthode d'extraction (M_extraction) de données correspondante.

6. Dispositif selon l'une quelconque des revendications 2 à 5, **caractérisé en ce que** les moyens (20) de stockage de données comportent, pour chaque donnée extraite identifiée par un type de données, des informations de type de donnée (t) et de valeur de donnée (v).

7. Terminal de téléphonie, **caractérisé en ce qu'**il est équipé d'un dispositif de traitement de messages selon l'une quelconque des revendications 1 à 6.

8. Procédé de traitement de messages pour terminal de télécommunication (22), lesdits messages étant reçus par le terminal lors de la mise en oeuvre d'un service de messagerie électronique, **caractérisé en ce qu'**il comprend les étapes consistant à analyser les messages pour détecter le type de message auquel appartient chaque message reçu parmi un ensemble de types de messages prédéterminés susceptibles de véhiculer des données destinées à des applications logicielles embarquées à bord du terminal et extraire, de chaque message reçu (M) qui appartient à l'un desdits types de messages, les données destinées auxdites applications.
